# EUROPÄISCHE PATENTSCHRIFT

(11) **EP 0 936 363 B1**
(45) Veröffentlichungstag und Bekanntmachung des Hinweises auf die Patenterteilung: **10.03.2004**
(21) Anmeldenummer: 98121687.2
(22) Anmeldetag: 13.11.1998
(51) Int. Cl.: F16B 21/07, F16B 5/02

(54) **Schwingungenentkopplungseinrichtung**
Decoupling element for vibrations
Elément de découplage pour les vibrations

(30) Priorität: 16.02.1998 DE 19806210
(43) Veröffentlichungstag der Anmeldung: 18.08.1999
(73) Patentinhaber: ROBERT BOSCH GMBH, 70442 Stuttgart (DE)
(72) Erfinder: Westenberger, Lutz, 71686 Remseck (DE); Hezel, Bruno, 70565 Stuttgart (DE); Ulrich, Markus, 73635 Rudersberg (DE)

(56) Entgegenhaltungen:
- DE-A- 19 654 848
- DE-C- 4 413 392

## Beschreibung

### Stand der Technik

Die Erfindung geht aus von einer Schwingungenentkopplungseinrichtung nach der Gattung des Anspruchs 1.

Bei Motoren, insbesondere bei Brennkraftmaschinen, läßt es sich auch bei noch so gutem Auswuchten kaum vermeiden, daß ein Bauteil, beispielsweise der Motorblock, während des Arbeitens des Motors schwingt. Diese Schwingungen können zu unangenehmer Geräuschentwicklung beitragen. Damit die Schwingungen des Bauteils nicht bzw. nur gedämpft auf ein an das Bauteil angebautes Anbauteil übertragen werden, kann man Entkopplungselemente vorsehen, die für ein schwingungsmäßiges Abkoppeln des Anbauteils vom Bauteil sorgen. Damit kann die Geräuschentwicklung häufig beträchtlich reduziert werden. Bei dem an das Bauteil angebauten Anbauteil handelt es sich beispielsweise um ein Gehäuse, vorzugsweise um eine Zylinderkopfhaube, einen Ventildeckel, ein Luftführungsgehäuse bzw. ein Saugrohr einer Sauganlage für die Brennkraftmaschine.

Üblicherweise wird das Anbauteil mit Befestigungsschrauben am Bauteil befestigt. Damit auch im Bereich der Befestigungsschrauben das Anbauteil vom Bauteil schwingungsmäßig entkoppelt ist, wird auch im Bereich jeder Befestigungsschraube ein Entkopplungselement vorgesehen, so dass auch zwischen dem Schraubenkopf der Befestigungsschraube und dem Anbauteil keine starre Verbindung besteht. Für diesen Zweck gibt es ein Entkopplungselement, das zwischen dem Schraubenkopf der Befestigungsschraube und der Öffnung, durch die die Befestigungsschraube hindurchgesteckt wird, vorgesehen ist.

Die DE 19654848 A1 zeigt ein Montageteil mit einer Befestigungsschraube zum Befestigen eines Anbauteils an einem Grundkörper, wobei zwischen dem Schraubenkopf der Befestigungsschraube und dem Anbauteil eine aus gummielastischem Werkstoff bestehend Manschette vorgesehen ist.

### Vorteile der Erfindung

Die erfindungsgemäße Schwingungenentkopplungseinrichtung mit den kennzeichnenden Merkmalen des Anspruchs 1 hat demgegenüber den Vorteil, dass die an dem Anbauteil vorgesehene Schnappeinrichtung dafür sorgt, dass die Befestigungsschraube mit dem Entkopplungselement sehr leicht in die Öffnung hineingesteckt werden kann, wo sie dann zusammen mit dem Entkopplungselement von der Schnappeinrichtung festgehalten wird. Dadurch ist vorteilhafterweise sichergestellt, dass während des Anbaus des Anbauteils an das Bauteil die richtige Befestigungsschraube und das richtige Entkopplungselement in der richtigen Öffnung zur Verfügung stehen. Dadurch wird der Aufwand für den Anbau des Anbauteils an das Bauteil wesentlich verringert.

Weil sich die Schnappeinrichtung direkt und fest am Anbauteil befindet, ist das Hineinstecken der Befestigungsschraube zusammen mit dem Entkopplungselement in die Öffnung sehr einfach möglich. Insbesondere besteht der Vorteil, dass auch bei nicht ebenen Flanschflächen zwischen dem Anbauteil und dem Bauteil das Hineinstecken der Befestigungsschraube in die Öffnung ebenfalls sehr leicht möglich ist. Weil sich die Schnappeinrichtung direkt am Anbauteil befindet, muss während des Hineinsteckens der Befestigungsschraube in die Öffnung vorteilhafter Weise kein zusätzliches die Befestigungsschraube haltendes Element gegengehalten werden. Es ist zwar auch möglich, daß auf der dem Schraubenkopf der Befestigungsschraube abgewandten Seite der Öffnung ein aus einem weichelastischen Elastomerwerkstoff bestehendes Element vorgesehen werden könnte, das die Befestigungsschraube mindestens indirekt hält, aber dieses hätte den Nachteil, daß dafür gesorgt werden müßte, daß dieses Element beim Hineinstecken der Befestigungsschraube in die Öffnung nicht weggedrückt wird, was insbesondere bei nicht ebenen Flanschflächen zwischen dem Anbauteil und dem Bauteil erheblichen zusätzlichen Aufwand bedeuten würde. Auch das Hineindrücken in das aus Elastomerwerkstoff bestehende Halteelement ist nicht so problemlos möglich wie das hier vorgeschlagene Einführen der Befestigungsschraube in die Öffnung mit der vorteilhaften Schnappeinrichtung.

Durch die in den Unteransprüchen aufgeführten Maßnahmen sind vorteilhafte Weiterbildungen und Verbesserungen der im Hauptanspruch angegebenen Schwingungenentkopplungseinrichtung möglich.

Die die Befestigungsschraube haltende und von der Schnappeinrichtung gehaltene Hülse bietet den Vorteil, daß sowohl die Befestigungsschraube als auch das Entkopplungselement geometrisch sehr einfach gestaltet werden kann. Insbesondere kann als Entkopplungselement ein geometrisch einfach geformtes ringförmiges Entkopplungselement verwendet werden. Es ist vorteilhafterweise sehr einfach möglich, an der Hülse eine Gegenhaltefläche vorzusehen, an der die an dem Anbauteil vorgesehene Schnappeinrichtung angreifen kann.

Die Schnappeinrichtung läßt sich vorteilhafterweise besonders einfach in Form von an dem Anbauteil vorgesehenen Schnapphaken ausbilden.

Ist der mindestens eine Schnapphaken auf der dem Schraubenkopf abgewandten Seite der Öffnung vorgesehen, dann kann der Schnapphaken vorteilhafterweise geometrisch besonders einfach gestaltet sein.

Häufig besteht das Anbauteil aus gespritztem formstabilem Kunststoff. Insbesondere in diesem Fall kann ohne merkbaren Aufwand der Schnapphaken einstückig an das Anbauteil angeformt werden. Der Schnapphaken kann auf vorteilhafte Weise zusammen mit dem Anbauteil in einer entsprechenden gemeinsamen Form gespritzt werden.

Die zwischen dem Schraubenkopf und dem Entkopplungselement vorgesehene, an die Hülse angeformte Scheibe sorgt vorteilhafterweise für eine Verbesserung der Dauerhaltbarkeit des Entkopplungselements.

Das weitere Entkopplungselement zwischen dem Anbauteil und dem Bauteil sorgt für eine weitere Verbesserung der schwingungsmäßigen Abkopplung des Anbauteils vom Bauteil. Weil häufig zwischen dem Anbauteil und dem Bauteil abgedichtet werden muß, kann das weitere Entkopplungselement vorteilhafterweise auch als Dichtelement zwischen dem Bauteil und dem Anbauteil verwendet werden.

Die die Befestigungsschraube in der Öffnung zentrierende Zentriereinrichtung sorgt für eine möglichst genaue Zentrierung der Befestigungsschraube innerhalb der Öffnung, so daß auch in radialer Richtung zwischen der Befestigungsschraube bzw. der Hülse und der an dem Anbauteil vorgesehenen Öffnung auf vorteilhafte Weise eine ausreichende schwingungsmäßige Entkopplung gewährleistet ist.

### Zeichnung

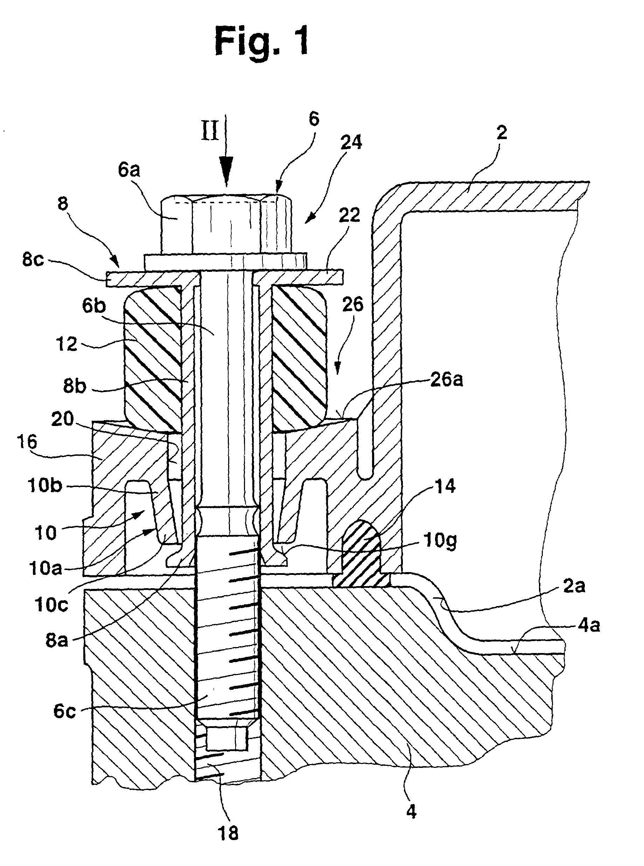

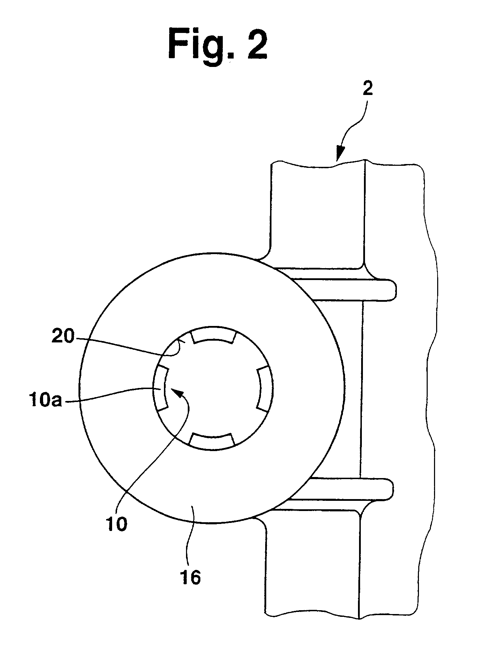

Ein bevorzugt ausgewähltes, besonders vorteilhaftes Ausführungsbeispiel der Erfindung ist in der Zeichnung vereinfacht dargestellt und in der nachfolgenden Beschreibung näher erläutert. Es zeigen die Figur 1 einen Abschnitt des Bauteils und des Anbauteils mit einem Längsschnitt durch die Schwingungenentkopplungseinrichtung mit der Befestigungsschraube und dem Entkopplungselement und die Figur 2 eine Draufsicht auf die am Anbauteil vorgesehene Öffnung, bevor die Befestigungsschraube in die Öffnung gesteckt wird.

### Beschreibung des Ausführungsbeispiels

Die erfindungsgemäß ausgeführte Schwingungenentkopplungseinrichtung kann dann verwendet werden, wenn ein Anbauteil, beispielsweise ein Gehäuse, an ein Bauteil, beispielsweise ein Motorblock einer Brennkraftmaschine, auf möglichst einfache Weise anbaubar sein soll. Das an den Motorblock anzubauende Gehäuse ist insbesondere eine Zylinderkopfhaube, ein Ventildeckel oder ein Luftführungsgehäuse bzw. ein Saugrohr einer Sauganlage für die Brennkraftmaschine.

Die Figur 1 zeigt beispielhaft ein Anbauteil 2, einen Abschnitt eines Bauteils 4, eine Befestigungsschraube 6, eine Hülse 8, eine Schnappeinrichtung 10, ein Entkopplungselement 12 und ein weiteres Entkopplungselement 14.

An das Anbauteil 2 ist ein Flansch 16 angeformt. Im Bauteil 4 gibt es ein Muttergewinde 18. Im Flansch 16 des Anbauteils 2 ist eine durchgehende im wesentlichen kreisrunde Öffnung 20 vorgesehen.

Die Figur 2 zeigt eine Draufsicht auf den Flansch 16 des Anbauteils 2 mit der Öffnung 20. In der Figur 2 sind der besseren Übersichtlichkeit wegen die Befestigungsschraube 6, die Hülse 8 und das Entkopplungselement 12 nicht dargestellt. Die in der Figur 2 dargestellte Blickrichtung ist in der Figur 1 durch einen Pfeil II markiert.

In allen Figuren sind gleiche oder gleichwirkende Teile mit denselben Bezugszeichen versehen.

Wie das bevorzugt ausgewählte Ausführungsbeispiel zeigt, wird die Schnappeinrichtung 10 durch vier an das Anbauteil 2 angeformte Schnapphaken 10a gebildet. Die Schnapphaken 10a erstrecken sich ein Stück entlang des Umfangs der Öffnung 20. Die Schnapphaken 10a haben jeweils einen Fußbereich 10b und einen Haltebereich 10c. Der Fußbereich 10b ist unmittelbar an das Anbauteil 2 einstückig angeformt. Der Fußbereich 10b ist radial zur Öffnung 20, d. h. in Querrichtung, relativ dünn und in axialer Richtung der Öffnung 20 länglich gestreckt und deshalb in radialer Richtung elastisch nachgiebig. Somit kann der Haltebereich 10c in radialer Richtung elastisch federn. Der Haltebereich 10c des Schnapphakens 10a ragt radial elastisch federnd in den Durchmesser der Öffnung 20 hinein.

Die Hülse 8 erstreckt sich durch die Öffnung 20 und hat einen dem Bauteil 4 zugewandten Bereich 8a, einen mittleren Bereich 8b und einen dem Bauteil 4 abgewandten Bereich 8c. Der Bereich 8a hat einen größeren Außendurchmesser als der mittlere Bereich 8b. Dadurch entsteht am Übergang zwischen den beiden Bereichen 8a und 8b eine umlaufende Stufe, die als Gegenfläche 10g der Schnappeinrichtung 10 dient, an der die Schnapphaken 10a angreifen können.

Die Befestigungsschraube 6 hat einen Schraubenkopf 6a und einen Schraubenschaft. Der Schraubenschaft hat an seinem dem Schraubenkopf 8a abgewandten Bereich ein Gewinde 6c. Zwischen dem Gewinde 6c und dem Schraubenkopf 6a hat der Schraubenschaft einen zylindrischen Bereich 6b. Der Außendurchmesser des Gewindes 6c und der Innendurchmesser der Hülse 8 sind so aufeinander abgestimmt, daß der Schraubenschaft der Befestigungsschraube 6 leicht in die Hülse 8 hineingesteckt werden kann. Der Außendurchmesser des zylindrischen Bereichs 6b ist kleiner als der Außendurchmessers des Gewindes 6c. Die Befestigungsschraube 6 kann so weit in die Hülse 8 hineingesteckt werden, bis der Schraubenkopf 8a am Bereich 8c der Hülse 8 zur Anlage kommt. Nach dem Hineinstecken der Befestigungsschraube 6 in die Hülse 8 wird der Bereich 8c der Hülse 8 an seinem Innendurchmesser plastisch verformt, genauergesagt etwas nach innen gedrückt, bis der Innendurchmesser des Bereichs 8c der Hülse 8 kleiner als der Außendurchmesser des Gewindes 6c, aber weiterhin größer als der Außendurchmesser des zylindrischen Bereichs 6b der Befestigungsschraube 6 ist. Damit erreicht man, daß die Befestigungsschraube 6 in Längsrichtung innerhalb der Hülse 8 bewegbar ist, aber nicht mehr aus der Hülse 8 herausfallen kann.

Der Bereich 8c ist so an die Hülse 8 angeformt, daß er die Funktion einer Unterlagscheibe bzw. einer Scheibe 22 übernehmen kann, über die sich der Schraubenkopf 6a auf dem Entkopplungselement 12 abstützen kann. Das aus einem gummiartigen, weichelastischen Elastomerwerkstoff bestehende ringförmige Entkopplungselement 12 sitzt mit Pressung auf dem mittleren Bereich 8b der Hülse 8 und schließt unmittelbar an die an die Hülse 8 angeformte Scheibe 22 an.

Die Befestigungsschraube 6, die Hülse 8 und das Entkopplungselement 12 bilden zusammen eine Vormontagebaugruppe 24. Die Vormontagebaugruppe 24 kann unabhängig von dem späteren Anfügen an das Anbauteil 2 rationell und maschinell einfach hergestellt werden. Durch die zusammenhängende Vormontagebaugruppe 24, aus der kein Teil herausfallen kann, erhält man den Vorteil, daß nicht mehrere Teile an das Anbauteil 2 angefügt werden müssen, sondern nur die zusammenhängende Vormontagebaugruppe 24.

Je nach Bedarf können an einem Anbauteil 2 mehrere Öffnungen 20 und mehrere Vormontagebaugruppen 24 vorgesehen sein.

Zum Anbauen der Vormontagebaugruppe 24 an das Anbauteil 2 wird, ausgehend von der dem Bauteil 4 abgewandten Seite des Flansches 16, der Bereich 8a der Hülse 8 durch die Öffnung 20 hindurchgesteckt. Beim Durchstecken des Bereichs 8a durch die Öffnung 20 werden die schräg verlaufenden, in den Durchmesser der Öffnung 20 radial hineinragenden Schnapphaken 10a der Schnappeinrichtung 10 elastisch radial nach außen gebogen. Sobald die an der Vormontagebaugruppe 24 vorgesehene Gegenfläche 10g über die Haltebereiche 10c der Schnapphaken 10a in die Öffnung 20 hineingeschoben wurde, schnappen die Haltebereiche 10c der Schnapphaken 10a elastisch federnd radial nach innen. Dadurch wird erreicht, daß die Vormontagebaugruppe 24, und damit auch die Befestigungsschraube 6, die Hülse 8 und das Entkopplungselement 12 in der Öffnung 20 festgehalten werden.

Die Schnapphaken 10a der Schnappeinrichtung 10 wirken in der Weise, daß die Befestigungsschraube 6 mit dem Entkopplungselement 12 bzw. die Vormontagebaugruppen 24 ohne nennenswerten Kraftaufwand sehr einfach und leicht in die Öffnung 20 hineingesteckt werden kann, aber nicht wieder ohne besonderen Aufwand herausfallen kann. Die Schnappeinrichtung 10 gewährleistet ein sicheres Festhalten der Befestigungsschraube 6 und des Entkopplungselements 12 bzw. der Vormontagebaugruppen 24 bei minimalem Materialeinsatz und bei vernachlässigbarem Herstellungsaufwand.

Das Anbauteil 2 hat eine dem Bauteil 4 zugewandte Flanschfläche 2a, und das Bauteil 4 hat eine dem Anbauteil 2 zugewandte Flanschfläche 4a. An der Flanschfläche 2a gibt es eine umlaufende Rille, in die ein weiteres Entkopplungselement 14 eingelegt ist. Das Entkopplungselement 14 dient zur Abdichtung eines innerhalb des Anbauteils 2 vorgesehenen Innenraum und zur schwingungsmäßigen Entkopplung zwischen dem Anbauteil 2 und dem Bauteil 4. Es gibt Ausführungen, bei denen die Flanschfläche 2a des Anbauteils 2 nicht eben ist; die Flanschfläche 2a kann beispielsweise in einem Bereich oder in mehreren Bereichen halbkreisförmig zurückspringend oder vorspringend sein, weil beispielsweise das Anbauteil 2 eine an einen Motorblock angebaute Zylinderkopfhaube ist und zwischen der Zylinderkopfhaube und dem Motorblock sich beispielsweise eine Vakuumpumpe befindet.

Weil die Schnapphaken 10a direkt und fest an dem Anbauteil 2 vorgesehen sind, ist das Hineinstecken der Vormontagebaugruppe 24 in die Öffnung 20 sehr einfach, insbesondere muß auf der dem Schraubenkopf 6a abgewandten Stirnseite der Öffnung 20 kein zusätzliches, beispielsweise aus gummielastischem Werkstoff bestehendes Element vorgesehen sein, das entweder mühsam mit dem Anbauteil 2 verbunden werden müßte oder das beim Hineinstecken der Vormontagebaugruppe 24 in die Öffnung 20 gegengehalten werden müßte, was einen hohen manuellen Aufwand erfordert, insbesondere in Fällen, in denen die Flanschfläche 2a des Anbauteils 2 nicht eben ist. Es wird auch vermieden, daß die Vormontagebaugruppe 24 mit erhöhtem Aufwand in einen gummielastischen Werkstoff hineingedrückt bzw. hineingeknöpft werden muß.

Die Befestigungsschraube 6 kann zusammen mit der Hülse 8 auf einfache Weise und mit geringer Kraft in die Öffnung 20 hineingesteckt werden, wo diese Bauteile dann von der Schnappeinrichtung 10 festgehalten werden. Dadurch ist es möglich, das Anbauteil 2 mit der Befestigungsschraube 6 und dem Entkopplungselement 12 zu versehen, lange bevor das Anbauteil 2 an das Bauteil 4 angebaut wird. Das Anfügen der Vormontagebaugruppe 24 an das Anbauteil 2 kann räumlich und zeitlich unabhängig vom Anbau des Anbauteils 2 an das Bauteil 4 geschehen. Dadurch wird der Anbau des Anbauteils 2 an das Bauteil 4 wesentlich erleichtert.

Es gibt Fälle, bei denen an dem Anbauteil 2 mehrere Öffnungen 20 vorgesehen sind, wobei beispielsweise die Befestigungsschrauben 6 und/oder die Entkopplungselemente 12 für die einzelnen Öffnungen 20 nicht alle gleich lang sind. Weil die Befestigungsschrauben 6 und die Entkopplungselemente 12 vorab in einem leicht kontrollierbaren Fertigungsprozeß unverlierbar und so gut wie nicht tauschbar mit dem Anbauteil 2 verbunden werden, wird ein Vertauschen der Befestigungsschrauben 6 und der Entkopplungselemente 12 währen des Anbauens des Anbauteils 2 an das Bauteil 4 vorteilhafterweise auf einfache und sichere Weise verhindert.

Das Entkopplungselement 12 und das weitere Entkopplungselement 14 sorgen dafür, daß das Anbauteil 2 gegenüber dem Bauteil 4 schwingungsmäßig abgekoppelt ist. Damit innerhalb der Öffnung 20 auch in radialer Richtung die Befestigungsschraube 6 bzw. die Hülse 8 vom Anbauteil 2 abgekoppelt ist, ist zwischen dem Flansch 16 des Anbauteils 2 und dem Entkopplungselement 12 eine Zentriereinrichtung 26 vorgesehen. Bei dem bevorzugt ausgewählten Ausführungsbeispiel wird die Zentriereinrichtung 26 gebildet von einer auf der dem Entkopplungselement 12 zugewandten Stirnseite des Flansches 16 vorgesehenen konkav-kegeligen Ansenkung 26a im Zusammenwirken mit einer konvexen Oberfläche der dem Flansch 16 zugewandten Stirnseite des Entkopplungselements 12. Die Ansenkung 26a verläuft konzentrisch zur Öffnung 20. Die dem Flansch 16 zugewandte Stirnseite des Entkopplungselements 12 ist konvex-ballig gewölbt. Durch das Zusammenwirken der beiden Stirnseiten entsteht die Zentriereinrichtung 26, die dafür sorgt, daß, nach dem Einschrauben der Befestigungsschraube 6 in das Muttergewinde 18 des Bauteils 4, die Hülse 8 und damit auch die Befestigungsschraube 6 konzentrisch durch die Öffnung 20 verlaufen, so daß in radialer Richtung zwischen der Hülse 8 und dem Anbauteil 2 eine unmittelbar starre, schwingungsmäßig ungünstige Verbindung vermieden wird.

Beim für die Beschreibung bevorzugt ausgewählten Ausführungsbeispiel umfaßt die Schnappeinrichtung 10 die vier Schnapphaken 10a. Es ist aber auch möglich, für das Festhalten einer Hülse bzw. einer Befestigungsschraube je Öffnung nur einen einzigen Schnapphaken vorzusehen. Es wird jedoch vorgeschlagen, mindestens zwei, vorzugsweise drei oder mehr Schnapphaken an einer Öffnung vorzusehen.

## Patentansprüche

1. Schwingungenentkopplungseinrichtung, insbesondere bei einem Antriebsmotor, mit einem Anbauteil (2) und mit einer Befestigungsschraube (6) mit einem Schraubenkopf zum Befestigen des Anbauteils (2) an einem Bauteil (4), wobei die Befestigungsschraube (6) durch eine am Anbauteil (2) vorgesehene Öffnung (20) gesteckt und zwischen dem Schraubenkopf und der Öffnung ein Entkopplungselement (12) vorgesehen ist, **dadurch gekennzeichnet, daß** an dem Anbauteil (2) mindestens eine die Befestigungsschraube (6) mindestens indirekt in der Öffnung (20) haltende Schnappeinrichtung (10, 10a) vorgesehen ist.

2. Schwingungenentkopplungseinrichtung nach Anspruch 1, **dadurch gekennzeichnet, daß** die Befestigungsschraube (6) in einer Hülse (8) gehalten wird, die Befestigungsschraube (6) zusammen mit der Hülse (8) durch die Öffnung (20) gesteckt ist und die Schnappeinrichtung (10, 10a) die Hülse (8) in der Öffnung (20) hält.

3. Schwingungenentkopplungseinrichtung nach Anspruch 1 oder 2, **dadurch gekennzeichnet, daß** die Schnappeinrichtung (10, 10a) im wesentlichen von mindestens einem an dem Anbauteil (2) angebrachten Schnapphaken (10) gebildet wird.

4. Schwingungenentkopplungseinrichtung nach Anspruch 3, **dadurch gekennzeichnet, daß** der mindestens eine Schnapphaken (10a) auf der dem Schraubenkopf (6a) abgewandten Seite der Öffnung (20) vorgesehen ist.

5. Schwingungenentkopplungseinrichtung nach Anspruch 3 oder 4, **dadurch gekennzeichnet, daß** der Schnapphaken (10a) einstückig an das Anbauteil (2) angeformt ist.

6. Schwingungenentkopplungseinrichtung nach einem der Ansprüche 3 bis 5, **dadurch gekennzeichnet, daß** der Schnapphaken (10a) elastisch federnd radial in den Durchmesser der Öffnung (20) hineinragt.

7. Schwingungenentkopplungseinrichtung nach einem der Ansprüche 3 bis 6, **dadurch gekennzeichnet, daß** am Umfang der Öffnung (20) mindestens zwei Schnapphaken (10a) vorgesehen sind.

8. Schwingungenentkopplungseinrichtung nach einem der vorhergehenden Ansprüche, **dadurch gekennzeichnet, daß** die Befestigungsschraube (6) von der Hülse (8) in der Hülse (8) gehalten wird.

9. Schwingungenentkopplungseinrichtung nach einem der vorhergehenden Ansprüche, **dadurch gekennzeichnet, daß** zwischen dem Schraubenkopf (6a) und dem Entkopplungselement (12) eine an die Hülse (8) angeformte Scheibe (22) vorgesehen ist.

10. Schwingungenentkopplungseinrichtung nach einem der vorhergehenden Ansprüche, **dadurch gekennzeichnet, daß** zwischen dem Bauteil (4) und dem Anbauteil (2) ein weiteres Entkopplungselement (14) vorgesehen ist.

11. Schwingungenentkopplungseinrichtung nach Anspruch 10, **dadurch gekennzeichnet, daß** das weitere Entkopplungselement (14) als Dichtelement zwischen dem Bauteil (4) und dem Anbauteil (2) dient.

12. Schwingungenentkopplungseinrichtung nach einem der vorhergehenden Ansprüche, **dadurch gekennzeichnet, daß** zwischen der Öffnung (20) und dem Entkopplungselement (12) eine die Befestigungsschraube (6) in der Öffnung (20) zentrierende Zentriereinrichtung (26) vorgesehen ist.

## Claims

1. Vibration uncoupling device, in particular in the case of an engine, with a mounting part (2) and with a fastening screw (6) having a screw head for fastening the mounting part (2) to a structural part (4), the fastening screw (6) being inserted through an orifice (20) provided on the mounting part (2), and an uncoupling element (12) being provided between the screw head and the orifice, **characterized in that** at least one snapping device (10, 10a) holding the fastening screw (6) at least indirectly in the orifice (20) is provided on the mounting part (2).

2. Vibration uncoupling device according to Claim 1, **characterized in that** the fastening screw (6) is held in a sleeve (8), the fastening screw (6), together with the sleeve (8), is inserted through the orifice (20), and the snapping device (10, 10a) holds the sleeve (8) in the orifice (20).

3. Vibration uncoupling device according to Claim 1 or 2, **characterized in that** the snapping device (10, 10a) is formed essentially by at least one snapping hook (10) attached to the mounting part (2).

4. Vibration uncoupling device according to Claim 3, **characterized in that** the at least one snapping hook (10a) is provided on that side of the orifice (20) which faces away from the screw head (6a).

5. Vibration uncoupling device according to Claim 3 or 4, **characterized in that** the snapping hook (10a) is integrally formed in one piece onto the mounting part (2).

6. Vibration uncoupling device according to one of Claims 3 to 5, **characterized in that** the snapping hook (10a) radially projects elastically resiliently into the diameter of the orifice (20).

7. Vibration uncoupling device according to one of Claims 3 to 6, **characterized in that** at least two snapping hooks (10a) are provided on the circumference of the orifice (20).

8. Vibration uncoupling device according to one of the preceding claims, **characterized in that** the fastening screw (6) is held in the sleeve (8) by the sleeve (8).

9. Vibration uncoupling device according to one of the preceding claims, **characterized in that** a disc (22) integrally formed onto the sleeve (8) is provided between the screw head (6a) and the uncoupling element (12).

10. Vibration uncoupling device according to one of the preceding claims, **characterized in that** a further uncoupling element (14) is provided between the structural part (4) and the mounting part (2).

11. Vibration uncoupling device according to Claim 10, **characterized in that** the further uncoupling element (14) serves as a sealing element between the structural parts (4) and the mounting part (2).

12. Vibration uncoupling device according to one of the preceding claims, **characterized in that** a centring device (26) centring the fastening screw (6) in the orifice (20) is provided between the orifice (20) and the uncoupling element (12).

## Revendications

1. Dispositif de découplage de vibrations, en particulier sur un moteur d'entraînement, comportant une pièce de montage (2) et une vis de fixation (6) avec une tête de vis pour la fixation de la pièce de montage (2) sur un composant (4), la vis de fixation (6) étant introduite dans une ouverture (20) prévue sur la pièce de montage (2), un élément de découplage (12) étant prévu entre la tête de vis et l'ouverture,
**caractérisé en ce que**
sur la pièce de montage (2), au moins un dispositif d'encliquetage (10, 10a) a été prévu pour maintenir au moins indirectement la vis de fixation (6) dans l'ouverture (20).

2. Dispositif de découplage de vibrations selon la revendication 1,
**caractérisé en ce que**
la vis de fixation (6) est maintenue dans un manchon (8), la vis de fixation (6) étant introduite dans l'ouverture (20) avec le manchon (8), le dispositif d'encliquetage (10, 10a) maintenant le manchon (8) dans l'ouverture (20).

3. Dispositif de découplage de vibrations selon la revendication 1 ou 2,
**caractérisé en ce que**
le dispositif d'encliquetage (10, 10a) est essentiellement constitué d'au moins un crochet d'encliquetage (10) placé sur la pièce de montage (2).

4. Dispositif de découplage de vibrations selon la revendication 3,
**caractérisé en ce qu'**
au moins un crochet d'encliquetage (10a) est prévu sur le côté de l'ouverture (20) opposé à la tête de vis (6a).

5. Dispositif de découplage de vibrations selon la revendication 3 ou 4,
**caractérisé en ce que**
le crochet d'encliquetage (10a) est d'une seule pièce avec la pièce de montage (2).

6. Dispositif de découplage de vibrations selon l'une des revendications 3 à 5,
**caractérisé en ce que**
le crochet d'encliquetage (10a) pénètre dans le diamètre de l'ouverture (20) selon un plan radial de manière élastique.

7. Dispositif de découplage de vibrations selon l'une des revendications 3 à 6,
**caractérisé en ce qu'**
au moins deux crochets d'encliquetages (10a) sont prévus sur le pourtour de l'ouverture (20).

8. Dispositif de découplage de vibrations selon l'une quelconque des précédentes revendications,
**caractérisé en ce que**
la vis de fixation (6) est maintenue par le manchon (8) dans le manchon (8).

9. Dispositif de découplage de vibrations selon l'une quelconque des précédentes revendications,
**caractérisé en ce qu'**
un disque (22) aménagé sur le manchon (8) est prévu entre la tête de vis (6a) et l'élément de découplage (12).

10. Dispositif de découplage de vibrations selon l'une quelconque des précédentes revendications,
**caractérisé en ce qu'**
un autre élément de découplage (14) est prévu entre le composant (4) et la pièce de montage (2).

11. Dispositif de découplage de vibrations selon la revendication 10,
**caractérisé en ce qu'**
un autre élément de découplage (14) est prévu comme pièce d'étanchéité entre le composant (4) et la pièce de montage (2).

12. Dispositif de découplage de vibrations selon l'une quelconque des précédentes revendications,
**caractérisé en ce qu'**
un dispositif de centrage (26) est prévu entre l'ouverture (20) et l'élément de découplage (12) pour le centrage de la vis de fixation (6) dans l'ouverture (20).
